Europäisches Patentamt

European Patent Office

Office européen des brevets

(19)

(11) Veröffentlichungsnummer: **0 275 819 B1**

(12) **EUROPÄISCHE PATENTSCHRIFT**

(45) Veröffentlichungstag der Patentschrift: **24.07.91**

(21) Anmeldenummer: **87810593.1**

(22) Anmeldetag: **15.10.87**

Die Akte enthält technische Angaben, die nach dem Eingang der Anmeldung eingereicht wurden und die nicht in dieser Patentschrift enthalten sind.

(51) Int. Cl.⁵: **B23H 1/10**, B01D 24/00, B01D 24/46, B01D 24/48, B01D 36/04

(54) **Labyrinthfilter für das Dielektrikum von Erodieranlagen.**

(30) Priorität: **22.12.86 CH 5075/86**
**02.04.87 CH 1305/87**
**29.06.87 CH 2434/87**

(43) Veröffentlichungstag der Anmeldung:
**27.07.88 Patentblatt 88/30**

(45) Bekanntmachung des Hinweises auf die Patenterteilung:
**24.07.91 Patentblatt 91/30**

(84) Benannte Vertragsstaaten:
**BE CH DE FR IT LI SE**

(56) Entgegenhaltungen:

| | |
|---|---|
| EP-A- 0 098 711 | WO-A-82/04197 |
| DE-A- 2 005 179 | DE-A- 2 607 951 |
| DE-A- 3 000 503 | DE-A- 3 205 361 |
| DE-C- 94 864 | FR-A- 1 158 789 |
| FR-A- 1 280 576 | FR-A- 1 532 544 |
| FR-A- 1 543 176 | FR-A- 2 364 059 |
| FR-A- 2 576 521 | GB-A- 534 312 |
| GB-A- 2 067 427 | US-A- 2 076 322 |
| US-A- 2 183 075 | US-A- 2 825 359 |
| US-A- 3 178 024 | US-A- 3 236 095 |
| US-A- 3 279 610 | US-A- 3 291 311 |

| | |
|---|---|
| US-A- 3 396 847 | US-A- 3 469 057 |
| US-A- 3 842 001 | US-A- 3 908 463 |
| US-A- 4 051 039 | US-A- 4 292 174 |
| US-A- 4 493 476 | |

WERKSTATT TECHNIK, Zeitschrift für industrielle Fertigung, Band 60, Nr. 1, Januar 1970, Seiten 41-42; Berlin, DE: "Filteranlage für Funkenerodiermaschine"

(73) Patentinhaber: **A.G. für industrielle Elektronik AGIE Losone bei Locarno**
**Via dei Pioppi 2**
**CH-6616 Losone(CH)**

(72) Erfinder: **Stricker, Max**
**Rebhalde**
**CH-9556 Zezikon(CH)**

(74) Vertreter: **EGLI-EUROPEAN PATENT ATTORNEYS**
**Horneggstrasse 4 Postfach 473**
**CH-8034 Zürich(CH)**

**Beschreibung**

Die Erfindung betrifft einen Labyrinthfilter für die sphärischen Metallpartikel im Dielektrikum von Erodieranlagen, sowie eine Filteranlage mit mindestens einem solchen Labyrinthfilter.

Bekanntlich muss das Dielektrikum von Erodieranlagen laufend von Verunreinigungen in Form von sphärischen Metallpartikeln der Grössenordnung 1 bis 20 $\mu$ befreit werden, die beim Erodiervorgang als Abtrag entstehen. Bekannte Filter für Erodieranlagen sind auf dem Prinzip der Zwangsfiltrierung aufgebaut, wobei die Partikel in und vor Oeffnungen, die kleiner als ihr Durchmesser sind, hängen bleiben. Solche Filter sind z.B. aus der US-A 3 469 057 sowie aus der Publikation "Werkstatttechnik", Januar 1970, S. 41-42 zu entnehmen. Dabei baut sich relativ rasch ein Bett aus Metallpartikeln auf, das den Filter schliesslich verstopft. Bekannte Filter dieser Art, wie z.B. Kieselgurfilter oder Patronen mit gewebeartigen Filtern, haben deshalb eine relativ kurze Standzeit und müssen periodisch ausgewechselt oder gewartet werden. Das periodische Austauschen oder Regenerieren der Filter führt zu grossem Anfall an nicht wiederverwendbarem Abfall, ist kostenintensiv und erfordert periodische manuelle Eingriffe zum Wechseln der Filter, was einen vollautomatischen Langzeitbetrieb, z.B. über Wochenende, ohne Ueberwachung ausschliesst.

Es sind auch andere, vorwiegend auf Sedimentation und dem Einsatz von Magneten beruhende Vorrichtungen und Verfahren zum Abscheiden von Metallpartikeln aus dem Dielektrikum von Erodieranlagen bekannt geworden, wie z.B. in der EP-A 0 098 711 beschrieben, welche indessen sehr aufwendig sind und sich in der Praxis nicht bewährt haben.

Anderseits sind natürlich Sandfilter als solche in vielfacher Ausgestaltung zum Entfernen von Schmutz aus Flüssigkeiten bekannt geworden. Es kann hierzu auf die Publikationen FR-A-2 364 053, US-A 3 842 001, sowie FR-A-1 532 544 verwiesen werden. Diese Filter sind ausnahmslos durch eine Durchlaufhöhe gekennzeichnet, die etwa dem Filterdurchmesser entspricht. Es hat sich gezeigt, dass mit derartigen herkömmlichen Sandfiltern die mikroskopischen, sphärischen Metallpartikel, die beim Funkenerosionsvorgang entstehen, nicht zurückgehalten werden. Deshalb wurden solche Filter bisher zum Reinigen des Dielektrikums von Erodieranlagen nicht eingesetzt.

Es stellt sich damit die Aufgabe, einen Filter für die kleinen sphärischen Metallpartikel aus Erodieranlagen zu schaffen, der eine längere Standzeit aufweist, leicht zu reinigen und wiederverwendbar ist, sowie einen vollautomatischen Langzeitbetrieb ohne manuelle Eingriffe ermöglicht.

Es hat sich überraschend gezeigt, dass die erwähnte Aufgabe mittels einem Labyrinthfilter gelöst werden kann, der gemäss Anspruch 1 aufgebaut ist.

Im Gegensatz zur erwähnten Zwangsfiltrierung beruht der Labyrinthfilter auf dem Effekt, dass die mikroskopisch kleinen sphärischen Metallpartikel in an sich grösseren Zwischenräumen in strömungsbedingten Ruhe- und Unterdruckzonen gefangen werden.

Im Gegensatz zu herkömmlich verwendeten Filtern, bei welchen ein feinmaschiges Gitter das Mitfliessen der Partikel verhindert und somit eine Zwangsfilterierung stattfindet, werden im Labyrinthfilter die grosse Anzahl von zufällig vorhandenen ruhigen Zonen, welche in jedem regelmässig durchflossenen Labyrinth vorhanden sind, ausgenützt zur zufälligen Ablagerung der Metallpartikel.

Ein solches Labyrinth wird zweckmässig aus kostengünstigen korn- oder kugelartigen Materialien aufgebaut, welche keine Verbindungen mit Metallpartikeln eingehen. Die Oberfläche des Kornes ist vorzugsweise möglichst fein, damit der durchfliessenden Flüssigkeit möglichst wenig Strömungswiderstand entgegengesetzt wird. Form und Grösse des Korns soll unterschiedlich sein, um lokal eine möglichst grosse Anzahl von verschiedenen Drücken und Strömungsgeschwindigkeiten auf der der Austrittsseite zugewandten Oberflächenhälfte des Kornes aufzubauen.

Aus den erwähnten Gründen entfaltet der Labyrinthfilter seine Wirkung für die mikroskopischen sphärischen Metallpartikel nur ab einer bestimmten Fliessgeschwindigkeit des Dielektrikums durch den Filter, wobei sich die Filterwirkung zur Hauptsache nicht durch den Aufbau eines Betts von im Gitter zurückgehaltenen Metallpartikeln ergibt, wie dies bei der Zwangsfiltrierung der Fall ist, sondern durch die Besetzung der erwähnten Ruhezonen über die gesamte Filterhöhe mit Metallpartikeln. Auf diese Weise wird der Labyrinthfilter über seine gesamte Höhe ausgenutzt. Er benötigt zur Regenerierung eine minimale Rückspülströmung. Werden die Körner des Labyrinths auch nur geringfügig aus ihrer Lage gebracht, so sind die abgelagerten Partikel sofort wieder frei. Das Labyrinth kann also entweder impulsartig oder aber mit stark wechselnden Drücken rückgespült werden, um zu verhindern, dass eine Filterwirkung im entgegengesetzten Sinn entsteht.

Die abgetragenen Partikel bei Erodierprozessen sind, wie bereits erwähnt, unmittelbar nach deren Entstehung für Absetzprozesse nicht geeignet. Sie bleiben sehr lange in der Schwebe, so dass die Dauer des Absetzprozesses für die Praxis zu lange ist.

Ueberraschend hat sich jedoch gezeigt, dass die Metallpartikel im Labyrinthfilter Konglomerate bilden, welche sich innert nützlicher Frist aus der Spülflüssigkeit absetzen lassen. Die für die Praxis genügend reine Flüssigkeit oberhalb der abgesetzten Schmutzschicht kann deshalb vor der nächsten Rückspülung wieder dem Rückspültank zugeleitet werden. Damit ist ein geschlossener Rückspülkreislauf für die Regenerierung erst möglich.

Um die erwähnten Rückspül- und Filtervorgänge automatisch ablaufen zu lassen, wären eine Vielzahl von gesteuerten Ventilen notwendig, welche einerseits durch den Ausfall die Betriebssicherheit gefährden und andererseits einen komplizierten und kostspieligen Aufbau der Anlage bedingen würden. Dabei besteht insbesondere die Gefahr, dass die Ventile durch die Metallpartikel im Dielektrikum mit der Zeit verstopft werden, insbesondere wenn sich diese an magnetisierten Ventilteilen anlagern. Vorzugsweise wird deshalb ein Zentralventil gemäss Anspruch 9 eingesetzt. Damit lassen sich mit drei Stellungen des Zentralventils sämtliche nötigen Verbindungen zwangsweise erstellen.

Nachfolgend wird ein Ausführungsbeispiel der Erfindung näher beschrieben. In den beiliegenden Figuren zeigen:

Fig. 1 eine schematische Schnittdarstellung eines Labyrinthfilters;

Fig. 2 eine schematische Darstellung der gesamten Filteranlage mit zwei Filtereinheiten, Zentralventil und Absetzteil für die Rückspülflüssigkeit

Fig. 3 eine schematische Darstellung des Zentralventils;

Fig. 4 eine Schnittdarstellung der Steuerplatte und der Dichtplatten des Zentralventils in einer ersten Ausführung;

Fig. 5 eine Aufsichts- und Schnittdarstellung einer zweiten Ausführung einer Dichtplatte des Zentralventils;

Fig. 6 eine schematische Ansicht der Verbindungsleitungen der Anlage;

Fig. 7 eine Explosionsansicht der einzelnen Ventilplatten des Zentralventils in seinen drei Betriebszuständen.

Fig. 8 eine Darstellung eines Rückhalteelementes;

Fig. 9 eine zweite Ausführung eines Rückhalteelementes.

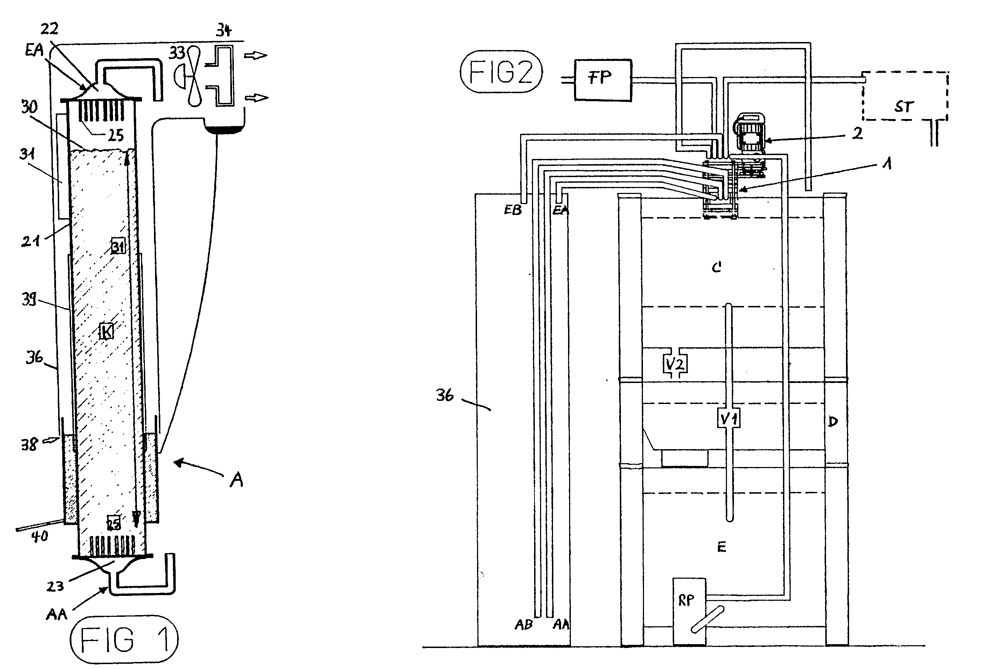

In Fig. 1 ist zunächst eine Filtersäule des Labyrinthfilters zusammen mit Kühlaggregaten dargestellt.

Wie bereits erwähnt, ist davon auszugehen, das nicht primär die Eintrittsoberfäche 30 zum Zurückschalten der anfallenden Metallpartikel dienen kann, sondern dass, bedingt durch die sphärische Form der Metallpartikel, die strömungsbedingten 'Ruhezonen' hinter den Filterkörnern ein Zurückhalten der Metallpartikel ermöglichen. Deshalb ist der Filter mit im Verhältnis zur Eintrittsfläche grosser Durchlaufhöhe 31 gebaut. Da der Durchlaufwiderstand im Vergleich mit anderen Filtern relativ klein ist, beschränkt vor allem die zur Veführung stehende Raumhöhe die Gesamtbauhöhe.

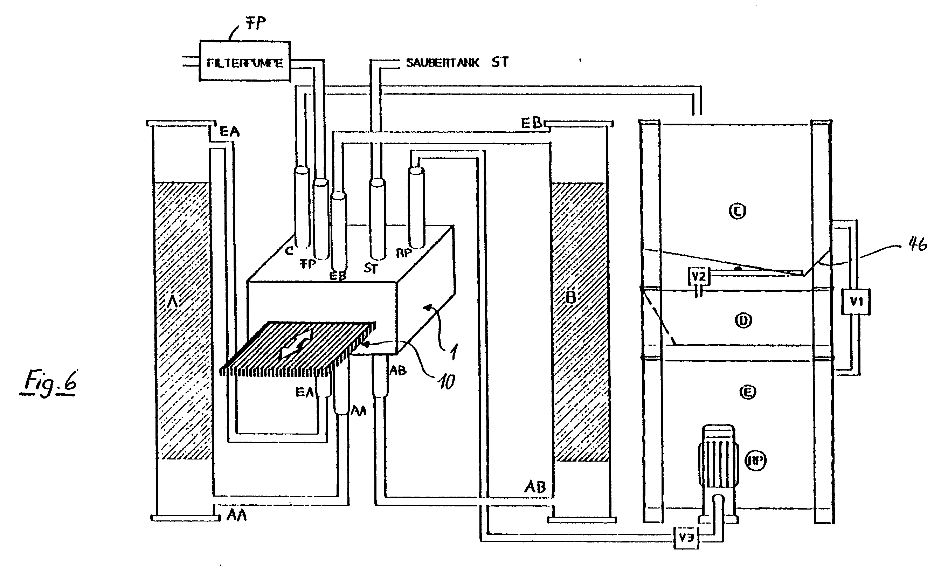

Wie insbesondere aus Fig. 6 zu entnehmen ist, kann die Bauhöhe durch die Serieschaltung zweier Filtereinheiten A und B reduziert werden. Jede dieser Einheiten ist im wesentlichen gemäss Fig. 1 ausgebildet. Die beiden Einheiten A,B können mit einer gemeinsamen Kühleinrichtung versehen sein, wie sie in Fig. 1 gezeigt ist. In dieser Figur ist nur eine der Einheiten A sichtbar, während man sich die andere durch diese Einheit verdeckt vorzustellen hat.

Die Filtereinheiten besitzen je einen Druckbehälter 21, in welchen die Filterkörner K lose eingefüllt sind.

Dabei werden die Druckbehälter nicht vollständig gefüllt. Der oben verbleibende Raum dient dazu, dass sich das Volumen der Füllung beim Rückspülen ausdehnen kann, so dass sich die einzelnen Filterkörner vom gegenseitigen Kontakt lösen und sich in freie Bewegung in der Rückspülflüssigkeit setzen können.

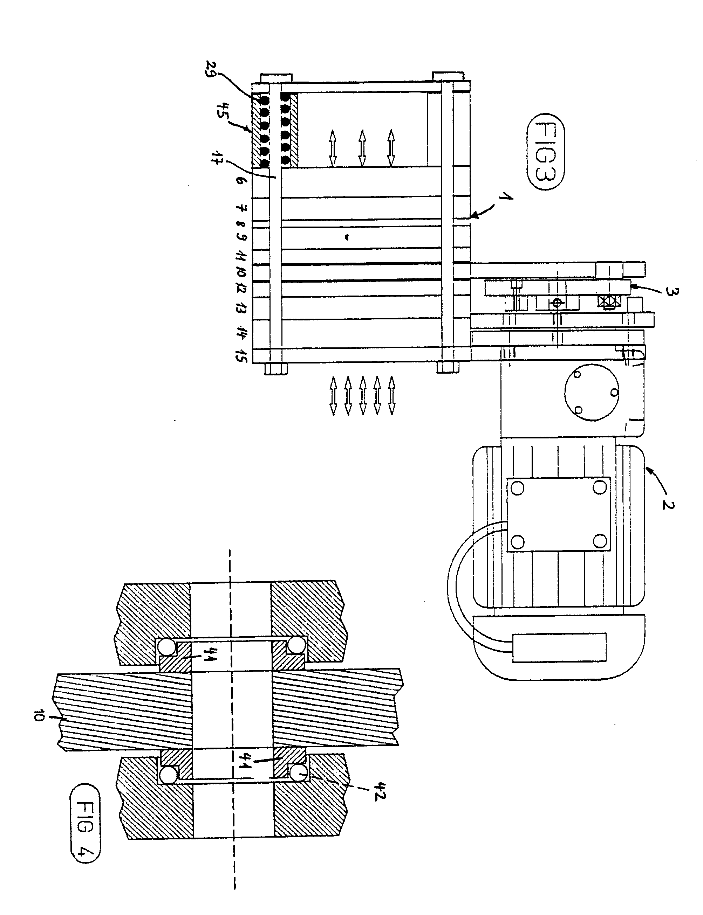

Auf den Grundkörper des Druckbehälters sind mit verschraubten Flanschen eine obere Sammelkammer 22 und eine untere Sammelkammer 23 angebracht, an welchen der Einlassanschluss EA und der Auslassanschluss AA angeordnet sind. Durch den oben gelegenen Einlassanschluss EA wird das zu filtrierende Dielektrikum eingespeist, welches mittels einer Filterpumpe FP (vgl. Fig.2,6) aus dem Erodierbehälter gefördert wird. Die Leistung der Filterpumpe, die Eintrittsoberfläche und die Durchlaufhöhe des Labyrinthfilters sind so aufeinander abgestimmt, dass die Strömungsgeschwindigkeit des Dielektrikums durch den Filter oberhalb eines Grenzwerts von ca. 2, vorzugsweise 3 Meter/min. liegt. Bei Strömungsgeschwindigkeiten unter 2 Meter/min. sind die entstehenden Unterdruckzonen bzw. Ruhezonen, in welchen die mikroskopischen Metallpartikel gefangen werden, nicht mehr in der gewünschten Stärke vorhanden, und die Filterwirkung ist nicht mehr gewährleistet.

Beim vorliegenden Ausführungsbeispiel beträgt der Rohrdurchmesser 211 mm, was einer Eintrittsoberfläche von 3.5 dm2 entspricht. Die Labyrinthhöhe pro Filtereinheit ist ca. 1400 mm, also insgesamt im Seriebetrieb ca. 2800 mm. Die Filterkörner aus Quarzsand haben eine Korngrösse zwischen 0,3 und 0,7 mm. Der freie Durchflussquerschnitt beträgt ca 7 % der erwähnten Eintrittsoberfläche. Im Betrieb wird von der Filterpumpe ein Volumen von 26 bis 32 Liter/min. gefördert. Die Strömungsgeschwindigkeit im Labyrinth beträgt bei einem mittleren Wert von 28 Liter/min. im Normalbetrieb damit ca. 11 Meter/min. Sie liegt damit wesentlich höher, als bei herkömmlichen Sandfiltern.

Bei diesen Werten wird eine Strömungsgeschwindigkeit des Dielektrikums durch das Labyrinth erzielt, die jeweils auf der Anströmungsseite abgewandten Seite der Filterkörner strömungsbedingte Unterdruckzonen entstehen lassen, in denen sich die mikroskopischen Metallpartikel ansammeln.

Die beim Erodieren entstehende Prozesswärme sowie die durch die Pumpen bewirkte Aufwärmung des Dielektrikums verlangt eine Kühlung des Dielektrikums. Diese kann vorteilhaft mit der Filtrierung kombiniert werden, wie in Fig. 1 gezeigt. Die Kühlung wird mit einem Ventilator 33 und einem nach oben offenen Kühlwasserbehälter 38, welcher den Filter im unteren Drittel umschliesst, unterstützt durch Faservlies 39, welches den Druckbehälter jeder Filtereinheit soweit wie möglich nach oben satt umschliesst und das Wasser auf eine möglichst grosse Oberfläche zum Verdunsten verteilt, sowie mit Kühlrippen 31, welche an der Druckbehälteraussenseite im oberen Drittel angebracht sind, erreicht. Die durch den Erosionsprozess und die Kühlung bewirkte Anreicherung der Luft mit Feuchtigkeit bedingt eine Luftentfeuchtungsanlage 34, welche ebenfalls ins Filtersystem integriert werden kann. Die unerwünschte Luftfeuchtigkeit wird damit verringert und das gewonnene Wasser dem Kreislauf über Leitung 40 wieder zugeführt. Die Leitung 40 ist eine Verbindung zum Dielektrikumstank der Erodieranlage. Die Luftentfeuchtung wird mit einem im Luftstrom des Ventilators 33 liegenden gekühlten Körper 34, an welchem die Luftfeuchtigkeit kondensiert, erreicht. Ein weiteres Konstruktionsmerkmal des Filters sind die Rückhalteelemente 25 (Fig. 8), welche auch in der Eintrittskammer angebracht sind und ein Ausschwemmen der Körner beim Rückspülprozess verhindern. Die Filterkörner K würden ohne Rückhalteelemente in der Eintrittskammer beim Rückspülen ausgeschwemmt. Die Rückhalteelemente bestehen aus Schraubenfedern 50, die auf einen Kern 52 mit Durchlasskanälen aufgezogen sind. Die gegenseitigen Abstände der Windungen sind dabei kleiner als die Grösse der Körner. In Fig. 9 ist eine zweite mögliche Ausführung eines Rückhalteelementes 25 mit einzelnen, auf den Kern aangespannten Federelementen 51 gezeigt.

Um für die periodische Reinigung der Filter durch Rückspülen den Betrieb der Anlage nicht unterbrechen zu müssen, kann jede der Filtereinheiten A,B separat rückgespült werden, während die jeweils andere den Filterbetrieb aufrecht erhält. Im Normalbetrieb werden die Filtereinheiten A,B in Serie betrieben. In Fig. 6 ist die Zusammenschaltung der Filtereinheiten über ein Zentralventil 1, das in drei Betriebsstellungen sämtliche Verbindungen herstellt, näher gezeigt.

Das Zentralventil 1 sorgt in einer ersten Stellung dafür, dass das Dielektrikum im Normalbetrieb zunächst die erste Filtereinheit A und danach die dazu in Serie geschaltete zweite Filtereinheit B je von oben nach unten durchströmt. Das aus dem Auslass AB der zweiten Einheit ausströmende, geklärte Dielektrikum wird dann einem Saubertank ST zugeführt, von wo es laufend wiederum zur Bearbeitungsmaschine gefördert wird. Es entsteht damit ein geschlossener Kreislauf von Dielektrikum, der bei der vorliegenden Anlage auch beim Reinigen der Filtereinheiten nicht unterbrochen wird. Zum periodischen Reinigen der Filtereinheiten wird jeweils eine der Einheiten rückgespült, während die andere im Kreislauf verbleibt. Die Rückspülung erfolgt ebenfalls mittels Dielektrikum, welches durch eine interwallweise ein- und ausgeschaltete Rückspülpumpe RP aus einem Rückspültank E der jeweiligen Filtereinheit zugeführt wird und diese impulsartig, d.h. mit stark wechselnden Drücken von unten nach oben durchströmt. Dadurch werden die das Filterlabyrinth bildenden Körner in freie Bewegung in der Rückspülflüssigkeit gesetzt und die erwähnten Ruhezonen für die Metallpartikel aufgehoben, so dass diese mit der Rückspülflüssigkeit ausgespült werden.

Die mit den Filterrückständen belastete Rückspülflüssigkeit wird jeweils einem Absetztank C zugeführt, an dessen Boden 46 sich die Metallpartikel absetzen, wie noch näher erläutert wird. Die darüber liegende Rückspülflüssigkeit wird danach über ein Ventil V1 wieder dem Rückspültank E zugeführt, während der Bodensatz aus Metallpartikeln über ein Ventil V2 in einen Trocknungstank D gelangt. Das zentrale Ventil 1 erstellt alle für diese Funktionen nötigen Verbindungen im Bereich der Filtereinheiten A und B, wie sich aus Fig. 6 ergibt.

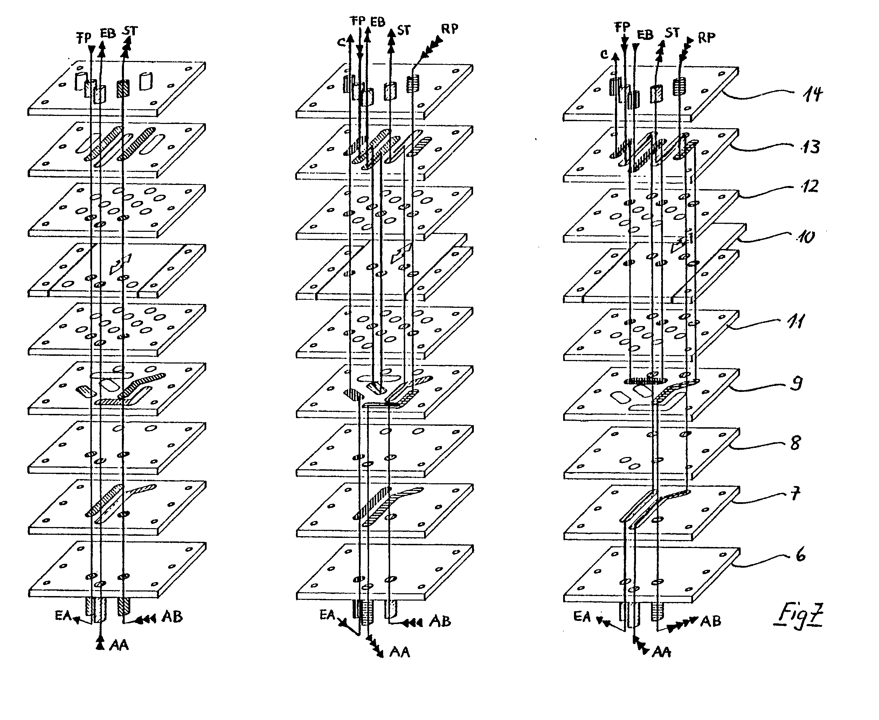

Das zentrale Ventil 1 ist, wie aus Fig. 7 ersichtlich, als Plattenpaket aus mehreren durchbrochenen Platten 6 bis 14 aufgebaut. Davon ist eine der Platten als Steuerplatte 10 ausgebildet und zwischen drei Stellungen verschiebbar, wobei jede Stellung einem der zuvor erwähnten Betriebszuständen entspricht. Diese drei Stellungen sind in Fig. 7 nebeneinander dargestellt. Das Plattenpaket besteht von oben nach unten aus einer Anschlussplatte 14, welche die 5 Anschlüsse C, FP, EB, ST und RP trägt. Darunter liegt eine erste Verbindungskanalplatte 13, welche von einer Dichtplatte 12 mit einem Lochraster gefolgt wird. Eine entsprechende Dichtplatte 11 ist auf der anderen Seite der dazwischen liegenden Steuereinheit 10 angeordnet. Nach der unteren Dichtplatte 11 folgt eine zweite Verbindungskanalplatte 9, eine Sperrplatte 8, eine dritte Verbindungskanalplatte 7 und die untere Anschlussplatte 6, mit 3 Anschlüssen EA, AA sowie AB. Die Verbindungskanalplatten sind jeweils immer von Lochplatten umgeben, welche definierte Duchlässe vom Durchmesser der Anschlussleitungen bilden.

Links in Fig. 7 ist die Arbeitsstellung gezeigt, bei welcher die beiden Filtereinheiten A,B in Serie betrieben werden. Dabei wird das Ventil, wie ersichtlich, geradlinig durchflossen. Beim Anschluss FP tritt Dielektrikum aus der Filterpumpe ins Ventil ein und beim Anschluss EA wieder aus, der mit dem Einlass der Filtereinheit A verbunden ist. Das Dielektrikum durchläuft danach diese Filtereinheit, deren Auslass an den Anschluss AA des Ventilpakets angeschlossen ist. Vom Anschluss AA gelangt das Dielektrikum zum Anschluss EB und wird von dort dem Einlass der zweiten Filtereinheit B zugeführt. Von deren Auslass gelangt das Dielektrikum über die Anschlüsse AB und ST des Ventils zum Saubertank. Die beiden Rückspülstellungen sind im mittleren und dem rechten Bild der Fig. 7 gezeigt, wobei das mittlere Bild die Rückspülung der Filtereinheit A, das rechte Bild diejenige der Filtereinheit B zeigt, wie die entsprechenden Bezeichnungen im Vergleich mit Fig. 6 sogleich ergeben und deshalb hier nicht im einzelnen erläutert wird.

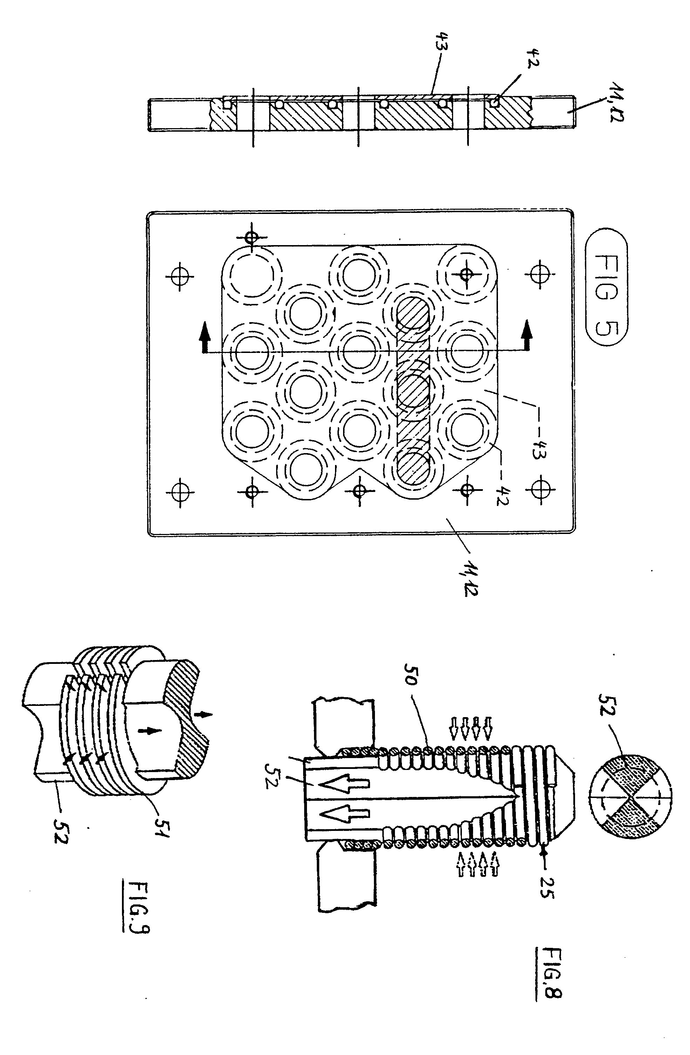

Im Zustand des Betriebs ist die Abdichtung zwischen den verschiedenen Ventilkanälen gewährleistet. An den Dichtplatten 11 und 12, bei welchen die Abdichtung trotz ihrer Verschiebbarkeit gewährleistet sein muss, ist wie in Fig. 4 dargestellt, jedes Loch an den der Steuerplatte 10 zugewandten Seiten von einem Dichtring 41 umgeben, der mit der jeweiligen Bohrung in der Steuerplatte 10 oder mit der nicht durchbrochenen Fläche der Steuerplatte 10 zusammenwirkt. Die Dichtringe 41 bestehen aus Kunststoff und passen sich kleineren Unebenheiten an der Steuerplatte 10 an. Sie werden von elastischen Ringen 42 gegen die Dichtplatten gedrückt.

In Fig. 5 ist eine Abwandlung des Dichtungsplattenaufbaus dargestellt. Die Dichtplatten 11,12 besitzen statt einzelner Dichtringe eine für alle Löcher gemeinsame Dichtscheibe 43, welche ebenfalls mittels elastischen Ringen 42 gegen die Steuerplatte 10 gedrückt wird und eine Gleitdichtung bildet.

Um im Betrieb die Dichtigkeit des Ventils zu erreichen, gleichzeitig aber kleine Verschiebekräfte für die Steuerplatte 10 sicherzustellen und die Abnutzung der Dichtringe 41 bzw. der Dichtscheibe 43 zu vermeiden, ist das Plattenpaket von einer Einspanneinrichtung 45 zusammengehalten, welche es gestattet, die Platten mit bestimmter Kraft zusammenzupressen. In Fig. 3, worin das Plattenpaket schematisch dargestellt ist, ist diese Einspanneinrichtung näher gezeigt. Das Plattenpaket wird von den Platten 6 und 15 mittels Schrauben 17 zusammengehalten, auf welchen die Platten verschieblich gelagert sind. Federn 29 geben eine immer vorhandene Vorspannung, welche die Dichtung nach aussen und zwischen den einzelnen Kanälen im Ventil sicherstellt.

Das Zentralventil 1 ist aus entsprechend durchbrochenen Niederdruck-Polyäthylen-Platten zusammengesetzt, welche sehr einfach und billig herstellbar sind. Die Steuerplatte 10 ist mit einem motorischen Antrieb 2 über einen Exzenter 3 in ihre drei Stellungen bringbar (Fig. 3).

Dieser Antrieb ist an eine zentrale Steuerung angeschlossen, welche den gesamten Betrieb der Anlage selbsttätig ablaufen lässt.

Der erläuterte, zweistufige Rückspülvorgang wird ausgelöst, wenn die erste Filtereinheit A soweit verschmutzt ist, dass es zu einem Druckaufbau in ihrer Eintrittskammer kommt.Ein dort angeordneter Druckschalter löst dann das bereits erläuterte Reinigungsprogramm aus. Durch die zentrale Steuerung werden der Antrieb der Steuerplatte 10, sowie die Ventile V1 und 3 und die entsprechenden Pumpen in programmierter Folge betätigt, wobei während der Verschiebung der Steuerplatte 10 die Filterpumpe FP und die Rückspülpumpe RP abgeschaltet sind.

Das beschriebene zentrale Ventil hat den Vorteil, das es nur drei definierte Schaltzustände gibt. Es kann damit nicht vorkommen, dass beim Ausfall eines Einzelventils die Flüssigkeit fehlgeleitet wird. Die Steuerung wird damit wesentlich vereinfacht. Die Anzahl und Länge der Verbindungsschläuche kann erheblich reduziert werden. Im Arbeitszustand wird das Ventil ohne Umlenkungen durchströmt, was Schmutzanlagerung verhindert.

Duch die erwähnte, periodische Rückspülung werden die mikroskopischen Metallpartikel mit der Rückspülflüssigkeit in den Absetztank C verfrachtet (vgl. Fig. 2 und 6). Im Labyrinthfilter haben sich diese Partikel zu Konglomeraten vereinigt, welche sich im Absetztank relativ rasch absetzen. Bei Metallpartikeln, welche direkt aus der Erodiermaschine kommen, ist dies nicht der Fall, indem sie Schwebeteilchen bilden, die sich auch nach sehr langer Zeit nicht absetzen lassen. Der Labyrinthfilter gemäss der Erfindung hat damit den Effekt, die Metallpartikel zu stabilen Konglomeraten zu vereinigen, welche sich im Absetztank nach relativ kurzer Zeit auf dem Boden ansammeln. Wie bereits erwähnt, kann die darüber liegende Rückspülflüssigkeit nach der Klärung dem Rückspültank E zugeführt werden und steht dort für die nächste Rückspülung zur Verfügung. Der Rückspülkreis bildet damit ebenfalls einen geschlossenen Kreislauf, aus welchem im Absetztank C und im Trocknungstank D die bei der Erosion abgetragenen, konglomerierten Metallpartikel abgeschieden werden. Im Trocknungstank D wird dabei der Bodensatz aus dem Absetztank auf einer Filtermatte abgelagert, durch welche die Restflüssigkeit ebenfalls in den Rückspültank ablaufen kann. Die auf der Filtermatte getrockneten Erosionsrückstände verfestigen sich dabei ziegelartig und können der Altmetallverwetung zugeführt werden.

In Fig. 2 schliesslich ist die vorstehende Anlage in kompakter Bauweise dargestellt, wie sie in Betrieben zur Anwendung gelangt. An diese Anlage können mehrere Erosionsmaschinen angeschlossen sein, wobei die Filterpumpe FP das verschmutzte Dielektrikum aus den Erodierbehältern in die Filteranlage und von dort in einen Saubertank ST (schematisch dargestellt) fördert, aus welchem das gereinigte Dielektrikum wiederum den Erodierbehältern zugeführt wird.

## Patentansprüche

1. Labyrinthfilter zum Herausfiltern von beim Erosionsvorgang entstehenden, sphärischen Abtragspartikeln aus dem Dielektrikum einer Funkenerodieranlage, dadurch gekennzeichnet, dass der Filter mindestens eine in Längsrichtung durchflossene Filtersäule (A, B) mit lose eingefüllten, ein Labyrinth bildenden Körnern (K) sowie eine an die Eingangsseite der Filtersäule anschliessbare Förderpumpe aufweist, wobei die Durchlaufhöhe der Filtersäule etwa das Sechsfache des auf die Kreisform gezogenen Säulendurchmessers ist, und wobei die mittels der Föderpumpe erzeugte Strömungsgeschwindigkeit des Dielektrikums durch das Labyrinth mindestens 2m/min beträgt.

2. Labyrinthfilter nach einem der vorangehenden Ansprüche, dadurch gekennzeichnet, dass die Strömungsgeschwindigkeit des Dielektrikums bei ca. 11 m/min liegt.

3. Labyrinthfilter nach einem der vorangehenden Ansprüche, dadurch gekennzeichnet, dass Filterkörner (K) einer Korngrösse zwischen 0,3 und 0,7 mm, vorzugsweise aus Quarzsand, verwendet werden.

4. Labyrinthfilter nach einem der vorangehenden Ansprüche, dadurch gekennzeichnet, dass die Filtersäule (A, B) über ihre Durchlaufhöhe (31) im wesentlichen einen konstanten Durchmesser (30) besitzt.

5. Labyrinthfilter nach einem der vorangehenden Ansprüche, dadurch gekennzeichnet, dass der Durchmesser einer Filtersäule (A, B) ca. 210 mm und deren Durchlaufhöhe ca. 1400 mm beträgt.

6. Labyrinthfilteranlage mit Labyrinthfilter nach einem der vorangehenden Ansprüche, dadurch gekennzeichnet, dass ein geschlossener Rückspülkreislauf (E, RP, C) vorgesehen ist, der einen Absetztank (C) für die Rückspülflüssigkeit aufweist, aus welchem die Rückspülflüssigkeit jeweils einer Filtersäule (A, B) zuführbar ist.

7. Labyrinthfilteranlage nach Anspruch 6, dadurch gekennzeichnet, dass mindestens zwei Filtersäulen (A, B) vorgesehen und über Ventile (1) derart mit einem Filterkreislauf verbunden sind, dass sie sowohl in Serie geschaltet als auch einzeln betreibbar sind, wobei jede Filtersäule (A, B) separat an den Rückspülkreislauf anschliessbar ist, während jeweils die andere weiter betreibbar bleibt.

8. Labyrinthfilteranlage nach Anspruch 7, dadurch gekennzeichnet, dass die Filtereinheiten (A, B) je einen Druckbehälter (21) aufweisen, die nebeneinander angeordnet und mit einer Kühleinrichtung (38-43) versehen sind, zur Kühlung der Druckbehälter an ihrer Aussenfläche.

9. Labyrinthfilteranlage nach Anspruch 8, dadurch gekennzeichnet, dass die Druckbehälter mit einer Ummantelung (36) versehen sind, mittels welcher ein Kühlluftstrom der Aussenfläche der Druckbehälter entlang führbar ist.

10. Labyrinthfilteranlage nach Anspruch 9, dadurch gekennzeichnet, dass die Druckbehälter teilweise von Wasser umgeben und durch dessen Verdunstung kühlbar sind, wobei die Kühlluft bzw. die Raumluft an einem Kondensator (34) zur Rückgewinnung von verdunstetem Wasser aus der Luft vorbeigeführt wird.

11. Labyrinthfilteranlage nach einem der vorangehenden Ansprüche 6 bis 10 mit mindestens zwei einzeln rückspülbaren Filtersäulen, gekennzeichnet durch ein Zentralventil (1), das als Plattenpaket (1) aus durchbrochenen Platten (6-14) aufgebaut ist, wovon eine Platte als Steuerplatte (10) ausgebildet und zwischen mindestens drei Stellungen bewegbar ist, derart, dass in der ersten Stellung im Ventil alle Verbindungen für den Filterbetrieb in Serieschaltung der beiden Filtersäulen (A, B) und in den beiden anderen Stellungen alle Verbindungen zum Rückspülen jeweils einer Filtersäule unter Beibehaltung des Filterbetriebes der anderen Filtersäule vorhanden sind.

12. Labyrinthfilteranlage nach einem der vorangehenden Ansprüche 6 bis 11, dadurch gekennzeichnet, dass eine an den Rückspülkreislauf angeschlossene Tankeinheit (C, D, E) vorgesehen ist, welche mindestens den Absetztank sowie einen Rückspültank (E) aufweist, der mit dem Absetztank (C) verbunden ist und die zum Rückspülen verwendete Flüssigkeit enthält.

## Claims

1. A labyrinth filter for removing spherical particles generated by the erosion process from the dielectric of a spark erosion apparatus, characterized in that the filter comprises at least one filter column (A, B) through which flow occurs longitudinally, containing loosely filled grains (K) forming a labyrinth, and a feed pump connected to the inlet end of the filter column wherein the flow height of the filter column is about six times the column diameter related to a circular cross-section and wherein the velocity of flow of the dielectric through the labyrinth generated by the feed pump is at least 2 meters per minute.

2. A labyrinth filter in accordance with any of the preceding claims characterized in that the velocity of flow of the dielectric is about 11 meters per minute.

3. A labyrinth filter in accordance with any of the preceding claims, characterized in that filter grains (K), preferably quartz sand, measuring between 0.3 and 0.7 mm are used.

4. A labyrinth filter in accordance with any of the preceding claims, characterized in that the filter column (A, B) has a substantially constant diameter (30) over the entire flow height (31).

5. A labyrinth filter in accordance with any of the preceding claims, characterized in that the cross section of a filter column (A, B) is about 210 mm and its height measures about 1,400 mm.

6. A labyrinth filter apparatus comprising a labyrinth filter in accordance with any of the preceding claims, characterized in that a closed backwash circuit (E, RP, C) is provided comprising a deposit tank (C) for the backwash liquid, from which the backwash liquid can be supplied to a filter column (A, B) again.

7. A labyrinth filter apparatus in accordance with Claim 6, characterized in that at least two filter columns (A, B) are provided, and are connected via valves (1) to a closed filtration circuit in such a way that the columns can be operated either in series or separately, wherein each filter column (A, B) can be connected separately to the backwash circuit, while the other remains available for normal operation.

8. A labyrinth filter apparatus in accordance with Claim 7, characterized in that each of the filter columns (A, B) has a pressure tank (21), these tanks being arranged side by side and being provided with cooling means (38 - 43) to cool the pressure tanks at their outer surface.

9. A labyrinth filter apparatus in accordance with Claim 8, characterized in that the pressure tanks are provided with a jacket (36) through which a stream of cool air is directed over the outer surface of the pressure tanks.

10. A labyrinth filter apparatus in accordance with Claim 9, characterized in that the pressure tanks are partially surrounded with water and are cooled by the evaporation thereof, wherein the cooling air or the room air passes along a condenser (34) to recover the evaporated water from the air.

11. A labyrinth filter apparatus in accordance with any of the preceding claims 6 to 10, with at least two labyrinth filters which can be backwashed individually, characterized in that there is provided a central valve (1) having a stack (1) of perforated plates, one of which is provided to serve as a control plate (10) which can be moved between at least three positions, such that in the first position, all connections for filter operation with both filter columns (A, B) connected in series are established within the valve, and such that in each of the other two positions, all connections are established for backwashing one of the filter columns while leaving the other column in normal operation.

12. A labyrinth filter apparatus in accordance with any of the preceding claims 6 to 11, characterized in that a tank unit (C, D, E) connected to the backwash circuit is provided, consisting of at least said deposit tank and a backwash tank (E) connected to the deposit tank (C) and containing the liquid used for backwashing.

## Revendications

1. Filtre en labyrinthe pour la filtration de particules sphériques d'érosion, apparaissant dans le processus d'érosion, dans le diélectrique d'une installation d'électro-érosion, caractérisé en ce que le filtre présente au moins une colonne de filtration (A, B) traversée en direction longitudinale et comportant des grains (K) introduits sous une forme non cohérente et formant un labyrinthe, et présente une pompe d'alimentation qui peut être raccordée du côté de l'entrée de la colonne de filtration, la hauteur de trajet de la colonne de filtration étant approximativement égale à six fois le diamètre de colonne tracé sur la section circulaire et en ce que la vitesse d'écoulement du diélectrique produite au moyen de la pompe d'alimentation est d'au moins 2 m/mn au travers du labyrinthe.

2. Filtre en labyrinthe suivant la revendication précédente, caractérisé en ce que la vitesse d'écoulement du diélectrique est d'environ 11 m/mn.

3. Filtre en labyrinthe suivant l'une quelconque des revendications précédentes, caractérisé en ce qu'on utilise des grains de filtration (K) d'une grosseur de grain comprise entre 0,3 et 0,7 mm, de préférence en provenance de sable siliceux.

4. Filtre en labyrinthe suivant l'une quelconque des revendications précédentes, caractérisé en ce que la colonne de filtration (A, B) présente un diamètre sensiblement constant (30) sur sa hauteur de trajet (31).

5. Filtre en labyrinthe suivant l'une quelconque des revendications précédentes, caractérisé en ce que le diamètre d'une colonne de filtration (A, B) s'élève à environ 210 mm et la hauteur de trajet à environ 1400 mm.

6. Installation de filtration en labyrinthe comportant un filtre en labyrinthe suivant l'une des revendications précédentes, caractérisée en ce qu on a prévu un circuit de rinçage fermé (E, RP, C) qui présente pour le liquide de rinçage à contre-courant un réservoir de décantation (C) à partir duquel le liquide de rinçage à contre-courant est chaque fois amené dans une colonne de filtration (A, B).

7. Installation de filtration en labyrinthe suivant la revendication 6, caractérisée en ce qu'au moins deux colonnes de filtration (A, B) sont prévues et sont reliées par des vannes (1) avec un circuit de filtration de façon qu'elles soient commutées tant en série qu'aussi de manière à pouvoir fonctionner individuellement, chaque colonne de filtration (A, B) pouvant être raccordée séparément au circuit de rinçage à contre-courant pendant que respectivement l'autre peut rester encore en fonctionnement.

8. Installation de filtration en labyrinthe suivant la revendication 7, caractérisée en ce que les ensembles de filtration (A, B) présentent chacun un réservoir à pression (21), ces derniers étant agencés l'un à côté de l'autre et étant pourvus d'un dispositif de refroidissement (38-43) pour le refroidissement de la face externe des réservoirs à pression.

9. Installation de filtration en labyrinthe suivant la revendication 8, caractérisée en ce que les réservoirs à pression sont pourvus d'une enveloppe (36) au moyen de laquelle un courant d'air de refroidissement peut être guidé le long des faces externes des réservoirs à pression.

10. Installation de filtration en labyrinthe suivant la revendication 9, caractérisée en ce que les réservoirs à pression sont partiellement entourés d'eau et peuvent être refroidis par son évaporation, l'air de refroidissement ou l'air environnant étant amené à un condenseur (34) pour la récupération de l'eau évaporée dans l'air.

11. Installation de filtration en labyrinthe suivant l'une des revendications 6 à 10 précédentes, comportant au moins deux colonnes de filtration qui peuvent être rincées individuellement, caractérisée par une vanne centrale (1) qui est construite sous la forme d'un empilage (1) de plaques percées (6-14), une plaque étant réalisée sous la forme d'une plaque de commande (10) et pouvant être déplacée dans au noins trois positions de façon qu'il y ait dans la vanne, dans la première position, tous les raccordements pour le fonctionnement de filtre en couplage en série des deux colonnes de filtration (A, B) et qu'il y ait, dans les deux autres positions, tous les raccordements pour le rinçage respectivement d'une colonne de filtration en conservant le fonctionnement de filtration de l'autre colonne de filtration.

12. Installation de filtration en labyrinthe suivant l'une quelconque des revendications 6 à 11 précédentes, caractériséeen ce qu on a prévu un ensemble de réservoir (C, D, E) qui est raccordé au circuit de rinçage à contre-courant et qui présente au moins le réservoir de décantation ainsi qu'un réservoir de rinçage à contre-courant (E) qui est raccordé au réservoir de décantation (C) et qui contient le liquide utilisé pour le rinçage à contre-courant.

FIG 1

FIG2

FIG3

FIG 4

FIG 5

FIG.9

FIG.8

Fig 7